# EUROPEAN PATENT APPLICATION

(11) **EP 1 614 669 A1**
(43) Date of publication of application: **11.01.2006**
(21) Application number: 05254060.6
(22) Date of filing: 29.06.2005
(51) Int. Cl.: C04B 28/02, E21B 33/13

(54) **Reactive sealing compostions for hydrocarbon containing subterranean formations**

(30) Priority: 02.07.2004 US 884373
(71) Applicant: HALLIBURTON ENERGY SERVICES, INC., Duncan Oklahoma 73536 (US)
(72) Inventor: Heathman James F, Texas 77450 (US); Dealy Sears T, Okalhoma 73529 (US)
(74) Representative: Wain, Christopher Paul

(57) **Abstract**

Sealing compositions for sealing a portion of a subterranean formation to prevent a flow of a liquid hydrocarbon into or from the portion comprise water, a hydraulic cement, an organophillic clay, a hydratable gelling agent, and a water soluble alkaline source.

## Description

The present invention relates to improved reactive sealing compositions for sealing liquid hydrocarbon containing subterranean formations.

In the drilling of oil and gas wells using the rotary drilling method, drilling fluid is circulated through the drill string and drill bit and then back to the surface by way of the wellbore being drilled. The drilling fluid maintains hydrostatic pressure on the subterranean formations through which the wellbore is drilled and circulates cuttings out of the wellbore. As the wellbore is drilled, formations are encountered which may be too weak to support the hydrostatic pressure of the drilling fluid column, or they have large natural fractures, vugs, or other passages which allow the drilling fluid to flow into the subterranean formations. Once the drilling fluid circulation is lost as a result of the drilling fluid entering a subterranean formation by way of fractures, vugs, or other passages, the drilling operations must be terminated while remedial steps are taken. Also, when a subterranean formation is penetrated containing fluids at a higher pressure than the hydrostatic pressure of the drilling fluid column, such fluids, e.g., liquid hydrocarbons, flow into the wellbore causing cross-flows or underground blowouts.

Heretofore, a variety of sealing compositions have been developed and used for combatting lost circulation, cross-flows, and underground blowouts. However, when the drilling fluid is a hydrocarbon-based fluid or when the fluid cross-flows or underground blowouts are liquid hydrocarbons, such sealing compositions have often been unsuccessful due to delayed and inadequate viscosity development by the sealing compositions.

Recently, oil-based and water-based compositions for sealing subterranean formations have been developed and utilized by us. The compositions are described in United States patent nos. 5,913,364, 6,060,434 and 6,167,967. While the compositions described in the above patents are very reactive, i.e. they very quickly develop viscosity and have been utilized successfully when the drilling fluid is an aqueous fluid or the cross-flow or blowout fluid is formation water, the sealing composition is not reactive when the fluid in the wellbore is a liquid hydrocarbon fluid.

More recently, very reactive water-based sealing compositions have been developed and utilized by Halliburton Energy Services, Inc., of Duncan, Oklahoma, which are disclosed in United States patent no. 6,258,757. While the sealing compositions are effective when the drilling fluid is a hydrocarbon-based fluid or the cross-flow or blowout fluid is a liquid hydrocarbon fluid and form relatively stiff unpumpable masses when placed and reacted, there are lost circulation, cross-flow, and blowout situations which require even greater resistance to flow and compressive strength in order to contain liquid hydrocarbon fluids.

Thus, there are continuing needs for improved lost circulation, cross-flow or blowout sealing compositions which are very reactive and form high strength masses which have compressive strengths when placed and reacted with liquid hydrocarbons.

We have now devised some improved reactive sealing compositions for sealing liquid hydrocarbon containing subterranean formations and associated methods of use.

In one aspect, the present invention provides a sealing composition for sealing a portion of a subterranean formation to prevent a flow of a liquid hydrocarbon into or from the portion of the subterranean formation comprising a water, a hydraulic cement, an organophillic clay, a hydratable gelling agent, and a water soluble alkaline source.

In another aspect, the present invention provides a method of sealing a portion of a subterranean formation to prevent a flow of a liquid hydrocarbon into or from the portion of the subterranean formation comprising the steps of providing a subterranean formation sealing composition comprising water, a hydraulic cement, an organophillic clay, a hydratable gelling agent, and a water soluble alkaline source; and introducing the subterranean formation sealing composition into the subterranean formation.

In one preferred arrangement, the present invention provides a method of sealing a portion of a subterranean formation to prevent a flow of a liquid hydrocarbon into or from the portion of the subterranean formation comprising the steps of providing a subterranean formation sealing composition comprising water, a hydraulic cement, an organophillic clay, a hydratable gelling agent and a water soluble alkaline source; and introducing the subterranean formation sealing composition into the subterranean formation such that the sealing composition contacts the liquid hydrocarbons thereby forming a sealing mass.

The present invention relates to improved reactive sealing compositions for sealing liquid hydrocarbon containing subterranean formations and associated methods of use.

The sealing compositions of the present invention are basically comprised of water, a hydraulic cement, an organophillic clay, a hydratable gelling agent, and a water soluble alkaline source. The organophillic clay instantaneously reacts with liquid hydrocarbons in the wellbore to form a high viscosity, semi-rigid sealing mass. The gelation and/or hydration of the hydraulic cement by the water is accelerated by the alkaline source in the compositions to quickly provide flow resistance and compressive strength to the compositions. The hydratable gelling agent is present in the compositions to maintain the solids in suspension in the compositions.

The water, in addition to hydrating the hydraulic cement, is present in a quantity sufficient to produce a pumpable slurry. The water may be from any source provided it does not contain compounds that adversely affect the components in the sealing compositions. The water can be fresh water or salt water. The term "salt water" is used herein to mean unsaturated salt solutions and saturated salt solutions including brines and sea water. Generally, the water is present in the sealing composition of the present invention in an amount in the range of from about 15% to about 75% by weight of the compositions, more preferably in the range of from about 20% to about 45%.

A variety of hydraulic cements can be utilized in accordance with present invention including those comprised of calcium, aluminum, silicon, oxygen, and/or sulfur which set and harden by reaction with water. Such hydraulic cements include Portland cements, pozzolanic cements, gypsum cements, aluminous cements, silica cements, and slag cements. The cements can be of conventional particle sizes or they can be of ultra-fine particle sizes. Portland cements are generally preferred for use in accordance with the present invention. Portland cements of the types defined and described in API Specification For Materials And Testing For Well Cements, API Specification 10, 5^{th} ed., dated July 1, 1990, of the American Petroleum Institute are particularly suitable. Preferred such API Portland cements include classes A, B, C, G, and H. The hydraulic cement used is included in the sealing compositions of the present invention in an amount in the range of from about 5% to about 60% by weight of the composition, more preferably in an amount of from about 10% to about 40%.

While various organophillic clays can be utilized, an alkyl quaternary ammonium bentonite clay is preferred. A particularly suitable alkyl quaternary ammonium bentonite clay for use in accordance with the present invention is commercially available from Southern Products, Inc., of Gonzales, Texas, under the trade designation "CLAYTONE-II™." The organophillic clay utilized is generally present in the composition of the present invention in an amount in the range of from about 20% to about 60% by weight of the composition, more preferably from about 30% to about 40%.

A variety of hydratable gelling agents can be utilized in accordance with the present invention. Preferred such hydratable gelling agents which yield high viscosities upon hydration include one or more of guar gum and guar derivatives such as hydroxypropylguar and carboxymethylguar, cellulose derivatives such as hydroxyethylcellulose, carboxymethylcellulose, and carboxymethylhydroxyethylcellulose, locust bean gum, carragenan gum, xanthan gum, and welan gum. Of these, welan gum is preferred. The hydratable gelling agent or agents used are included in the sealing composition of the present invention in an amount in the range of from about 0.1 % to about 1% by weight of the composition, more preferably from about 0.1% to about 0.5%.

The viscosities of the gelling agents when hydrated in the sealing composition water can be increased by combining one or more crosslinking agents with the gelled solution. Examples of crosslinking agents which can be utilized are multivalent metal salts or compounds which are capable of releasing the metal ions in an aqueous solution. Examples of such multivalent metal ions are chromium, zirconium, antimony, titanium, iron (ferrous or ferric), zinc, or aluminum. When used, a crosslinking agent as described above is included in the sealing composition of the present invention in an amount in the range of from about 0.1% to about 3% by weight of the composition, more preferably from about 0.1 % to about 1%.

The water soluble alkaline is a known cause of gelation and excessive viscosity, and premature gelation when present in hydraulic cement slurries. In order to facilitate the rapid gelation and viscosification of the hydraulic cement component of the sealing composition of the present invention, a water soluble alkaline source, such as sodium hydroxide, sodium aluminate, or sodium carbonate, functions as a pH buffer and gelation and/or set accelerating agent for the hydraulic cement in the sealing composition and is generally present in the sealing composition in an amount in the range of from about 1% to about 15% by weight of the composition, more preferably from about 1% to about 10%.

In order to provide an acid solution removable water insoluble bridging agent in the sealing composition to bridge over permeable portions of the walls of formations being sealed, particulate calcium carbonate can be included in the sealing composition. When used, the particulate calcium carbonate is included in the composition in an amount in the range of from about 5% to about 40% by weight of the composition.

Optionally, light weight additives may be added to the sealing composition of the present invention, *inter alia*, to reduce the density of the sealing composition. Any light weight additives compatible with the subterranean sealing composition may be used, including, but not limited to microspheres. Examples of suitable microspheres include, but are not limited to cenospheres, glass hollow microspheres, and ceramic hollow microspheres. An example of a suitable microsphere is commercially available from Halliburton Energy Services, Inc., of Houston, Texas, under the tradename, "SPHERELITE." Where included, the microspheres are present in the sealing composition in an amount sufficient to provide a sealing composition having a density in a desired range.

In order to facilitate the dispersal of particulate solid materials in the sealing composition, e.g., the hydraulic cement and the organophillic clay, a dispersing agent (surfactant) can be included in the composition. While a variety of dispersing agents can be utilized, preferred dispersing agents are the condensation reaction product of acetone, formaldehyde, and sodium sulfite, the condensation reaction product of sodium naphthalene sulfonate and formaldehyde, and sodium-N-methyl-N-oleyltaurine mixed with sulfate liquor. Of these, the condensation reaction product of acetone, formaldehyde, and sodium sulfite is most preferred. When used, the dispersing agent is included in the composition of the present invention in an amount in the range of from about 0.1% to about 5% by weight of the composition, more preferably from about 0.1 % to about 3%.

A variety of other suitable additives may be added to the sealing composition to alter its physical properties. It will be understood that such additives may include slurry density modifying materials (e.g., silica flour, silica fume, sodium silicate, synthetic hollow microspheres, natural or fly ash-derived hollow microspheres, microfine sand, iron oxides (hematite), barium sulfate (barite) and manganese oxides), dispersing agents, set retarding agents, set accelerating agents, fluid loss control agents, strength retrogression control agents, fillers, defoamers, silicas, and viscosifying agents.

The sealing compositions of the present invention can also be foamed with nitrogen or other suitable gas in the presence of a foaming agent and foam stabilizer for reducing the densities of the compositions, preventing fluid loss, and aiding in the diversion of the compositions into the subterranean formations to be sealed.

An example of a sealing composition of the present invention for sealing a portion of a subterranean formation to prevent the flow of liquid hydrocarbons into or from the portion of a subterranean formation comprises a water present in an amount in the range of from about 20% to about 50% by weight of the composition; a hydraulic cement present in an amount in the range of from about 20% to about 45% by weight of the composition; an organophillic clay present in an amount in the range of from about 10% to about 40% by weight of the composition; a hydratable gelling agent present in an amount in the range of from about 0.1% to about 0.8% by weight of the composition; and a sodium carbonate present in an amount in the range of from about 1% to about 15% by weight of the composition.

A more preferred sealing composition of the present invention for sealing a portion of a subterranean formation to prevent the flow of liquid hydrocarbons into or from the portion of a subterranean formation comprises: water present from about 25% to about 45% by weight of the composition; Portland cement present in an amount in the range of from about 20% to about 45% by weight of the composition; an alkyl quaternary ammonium bentonite clay present in an amount in the range of from about 10% to about 35% by weight of the composition; welan gum present in an amount in the range of from about 0.1 % to about 0.5% by weight of the composition; and sodium carbonate present in an amount in the range of from about 1% to about 7% by weight of the composition.

As previously mentioned, the above composition can include particulate calcium carbonate, a dispersing agent and other cement composition additives.

The methods of the present invention for sealing a portion of a subterranean formation to prevent the flow of liquid hydrocarbons into or from the portion of the subterranean formation are comprised of the steps of providing a subterranean formation sealing composition comprised of water, a hydraulic cement, an organophillic clay, a hydratable gelling agent, and a water soluble alkaline source, preferably sodium carbonate; and introducing the sealing composition into the subterranean formation.

In order to further illustrate the compositions and methods of the present invention, the following example is given.

### EXAMPLE

Three sealing compositions of this invention were prepared. The first consisted of fresh water, API Class G Portland cement, calcium carbonate bridging agent, and organophillic clay. The second and third compositions consisted of fresh water, API Class G Portland cement, calcium carbonate bridging agent, organophillic clay, welan gum, sodium carbonate, and a dispersing agent comprised of acetone, formaldehyde, and sodium sulfite.

Each of the sealing compositions were reacted with equal volume amounts of kerosene, and the reaction times required for the mixtures to form semi-rigid, moldable consistencies were determined. The amounts of the various components in percent by weight of the sealing composition and the results of the tests are given in the Table below.

**TABLE Reaction Times of Sealing Compositions When Contacted With Kerosene***

| Sealing Compo-sition No. | Water, % by weight | Cement, % by weight | Bridging Agent, % by weight | Organophillic Clay, % by weight | Welan Gum, % by weight | Sodium Carbonate, % by weight | Dispersing Agent, % by weight | Reaction Time at 130°F |
|---|---|---|---|---|---|---|---|---|
| 1 | 45 | 26 | 13.9 | 15.1 | - | - | - | > 20 min. |
| 2 | 45 | 25.91 | 13.9 | 12.8 | 0.12 | 2.09 | 0.18 | 8 min. |
| 3 | 44.2 | 21.0 | 10.5 | 18.8 | 0.17 | 3.07 | 2.35 | < 15 sec. |

| | | | | | | | | |
|---|---|---|---|---|---|---|---|---|
| * all weight percentages in this table are by weight of the sealing composition as a whole | | | | | | | | |

From the Table, it can be seen that the sealing compositions of the present invention react very rapidly upon contact with hydrocarbons to form semi-rigid moldable sealing masses.

## Claims

1. A sealing composition for sealing a portion of a subterranean formation to prevent a flow of a liquid hydrocarbon into or from the portion of the subterranean formation, which composition comprises: water present in an amount of from 15% to 60%, preferably 25% to 50%, by weight of the composition; a hydraulic cement present in an amount of from 15% to 75% by weight of the composition; an organophillic clay present in an amount of from 5% to 60% by weight of the composition; a hydratable gelling agent present in an amount of from 0.1% to 1% by weight of the composition; and a water soluble alkaline source.

2. A composition of claim 1 wherein the water is fresh water or salt water.

3. A composition according to claim 1 or 2, wherein the hydraulic cement is Portland cement, pozzolanic cement, gypsum cement, aluminous cement, silica cement, or slag cement.

4. A composition according to claim 1, 2 or 3, wherein the organophillic clay is an alkyl quaternary ammonium bentonite clay, preferably present in an amount from 10% to 40% by weight of the composition.

5. A composition according to any of claims 1 to 4, wherein the hydratable gelling agent is one or more of guar gum, hydroxypropylguar, carboxymethylguar, hydroxyethylcellulose, carboxymethylcellulose, carboxymethylhydroxyethylcellulose, locust bean gum, carragenan gum, xanthan gum and welan gum.

6. A composition according to any of claims 1 to 5, wherein the water soluble alkaline source is sodium hydroxide, sodium aluminate or sodium carbonate, and is present in an amount of from 1% to 15% by weight of the composition.

7. A composition according to any of claims 1 to 6, which further comprises a particulate calcium carbonate present in an amount of from 5% to 40% by weight of the composition.

8. A composition according to any of claims 1 to 7, which further comprises a dispersing agent present in an amount of from 0.1% to 5% by weight of the composition.

9. A composition according to claim 8, wherein the dispersing agent is the condensation reaction product of acetone, formaldehyde, and sodium sulfite, or the condensation reaction product of sodium naphthalene sulfonate and formaldehyde, and sodium-N-methyl-N-oleyltaurine mixed with sulfate liquor.

10. A method of sealing a portion of a subterranean formation to prevent a flow of a liquid hydrocarbon into or from the portion of the subterranean formation, which method comprises introducing into the formation a sealing composition comprising water, a hydraulic cement, an organophillic clay, a hydratable gelling agent, and a water soluble alkaline source.

11. A method according to claim 10, wherein the sealing composition is brought into contact with liquid hydrocarbon thereby forming a sealing mass.
